(19) Europäisches Patentamt
European Patent Office
Office européen des brevets

(11) **EP 4 181 019 A1**

(12) **EUROPEAN PATENT APPLICATION**

(43) Date of publication:
**17.05.2023 Bulletin 2023/20**

(21) Application number: **21290073.2**

(22) Date of filing: **11.11.2021**

(51) International Patent Classification (IPC):
**G06N 3/04** *(2023.01)*   **G06N 3/063** *(2023.01)*
**G06F 12/00** *(2006.01)*

(52) Cooperative Patent Classification (CPC):
**G06N 3/063; G06F 12/00; G06N 3/045**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GrAI Matter Labs S.A.S.**
**75012 Paris (FR)**

(72) Inventors:
• **Waeijen, Luc Johannes Wilhelmus**
  **5656 AG Eindhoven (NL)**
• **Van Berkel, Kees**
  **5656 AG Eindhoven (NL)**
• **Pires Dos Reis Moreira, Orlando Miguel**
  **5656 AG Eindhoven (NL)**

(74) Representative: **V.O.**
**P.O. Box 87930**
**2508 DH Den Haag (NL)**

(54) **CONVOLUTIONAL NEURAL NETWORK PROCESSING SYSTEM AND METHOD**

(57)      A convolutional neural network processing module (1) is disclosed herein that comprises a data processor (4) for processing data from an input feature map and generating data for an output feature map in an output feature map storage space (3). The data processor (4) is configured to update output feature map Fo data in an input centric manner, the data processor therewith updating a set of output feature data elements of the output feature map Fo associated with an input feature data element Fi(i, ...$x_j$, ...) by a convolution kernel with weights $W(z, i,,...,k,..)$ using the following computation:
$Fo(z,.., x_j - k_j, ...) = f (Fo(z, ... ,x_j - k_j, ... ), Fi(i,..x_j, ...) * W(z,i, ... k_j ... ))$, wherein f is an update function. Respective series of output feature data elements with respective output feature data element coordinate values are stored at respective series of mutually successive locations in the output feature map storage space (3), and the data processor (4) is configured to access a series of mutually successive locations in the output feature map storage space (3) when performing the computations associated with an input feature data element Fi(i, ...xj, ...). The disclosure further relates to a neural network processing system comprising a convolutional neural network processing module and to a convolutional neural network processing method.

FIG. 8

**Description**

BACKGROUND

'Standard' artificial neural networks (ANNs) consist of many convolutional layers. These standard ANNs operate in an output-centric manner, i.e. in operation the convolutional layer computes each element of its output feature map using data from a preceding input feature map within a convolution kernel at a position in the preceding map corresponding to the position of the element to be computed. This typically involves a significant yet static compute workload. Typically neural network accelerators for these standard ANNs use vectorization to efficiently process this workload.

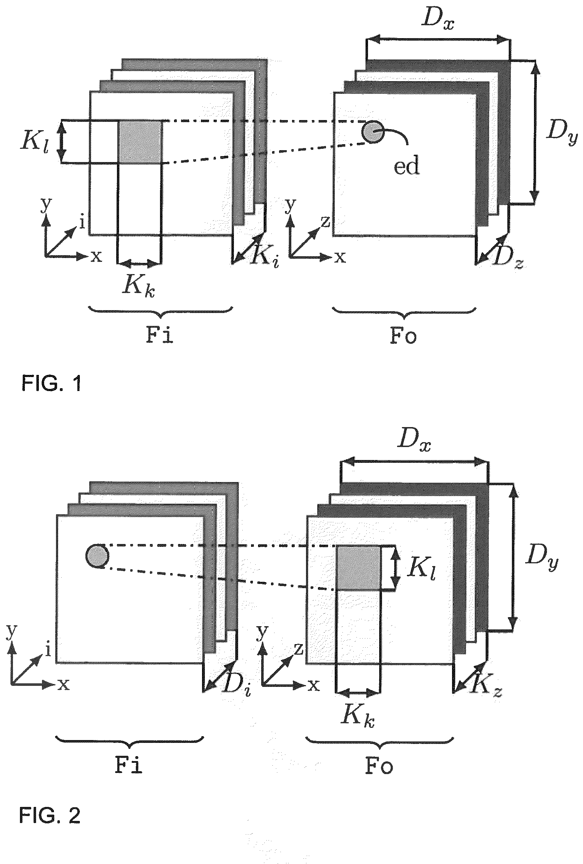

FIG. 1 schematically shows an input feature map Fi and an output feature map Fo of a convolutional neural network layer in a standard ANN. The input feature map Fi specifies an input feature vector as a function of a pair of lateral coordinates (y, x) and an input feature index coordinate (i). Similarly, the output feature map Fo specifies an output feature vector as a function of a pair of lateral coordinates (y, x) and an output feature index coordinate (z). As shown in FIG. 1, the output feature map has lateral dimensions $D_y$, $D_x$ in the y and x direction respectively, and a dimension $D_z$ in the direction of the feature vector index coordinate. It is further shown in FIG. 1 that a convolution kernel is defined with dimensions $K_i$, $K_l$, $K_k$, in the directions i, y, x respectively. In operation, the convolutional layer of the standard ANN performs a convolution operation for each element ed, with the convolution kernel defined by $K_i$, $K_l$, $K_k$, using the expression:

$$Fo(z, y, x) = Act(\sum_{i \in Ki} \sum_{l \in Kl} \sum_{k \in Kk} Fi(i, y + l, x + k) * W(z, i, l, k)) \qquad (1)$$

Therein W(z, i, l, k) define the weights of the convolution kernel. As shown in FIG. 1 every element ed with coordinates (z, y, x) is associated with a set of elements in the input feature map Fi with coordinates (i, y+1, x+k) for which the weight W(z, i, 1, k) of the convolution kernel is non-zero. The function Act is an activation function, usually a non-linear function, such as the ReLU activation function, the Heavyside activation function or the logistic activation function. For clarity the computation elements that perform the various computations are not shown in FIG. 1 and FIG. 2. Examples thereof will be discussed in the detailed description of the application.

The computations to be performed by a convolutional layer of a standard ANN may be expressed by the following pseudocode example: Code Example 1 .

```
Code Example 1

for ( int y=0; y<Dy ; y++)
  for (int x=0; x<Dx; x++)
    for ( int z=0; z<Dz ; z++){
      for ( int i=0; i<Di ; i++){
        for ( int l=0; l<Dl ; 1++)
          for ( int k=0; k<Dk; k++)
            Fo [z][y][x]+= Fi [i][y+l][x+k] * W [z][i][l][k];
      }
      Fo [z] [y] [x] = Act (Fo [z][y][x]); }
    }
```

As becomes apparent from Code Example 1, the evaluation focusses on gathering all input data from the input feature map associated with one element in the output featuremap Fo and completing that computation, before moving on to the next element in Fo. Code Example 1 captures the output-centric evaluation of a convolution. The three outer loops, i.e., y, x, and z, effectively iterate over the complete set of elements in Fo. The three inner loops, i.e., i, l, and k, iterate over all the elements associated therewith in the input feature map Fi to complete the evaluation of the currently selected element ed of the output feature in Fo by the outer loops. In terms of FIG. 1 all the dependencies in Fi, i.e., the elements in the box $K_l \otimes K_k \otimes K_i$, are collected by the inner loops, while the outer loops move over all neurons in Fo, i.e., $D_z \otimes D_y \otimes D_x$. Note that the intra-ordering of the outer loops can be permuted without affecting the output-centric behavior of the evaluation. This applies analogously to the intra-ordering of the outer loops. The abundant data-level parallelism in this computation, and the fact that the loop bounds are statically known, enables ample opportunities for vectorization. For this reason GPUs and other vector machines such as systolic arrays are so popular for the acceleration of classic neural networks.

The layers in neuromorphic, or sparse, ANNs differ from the convolutional layers in standard ANNs. In particular, the convolutions are described/evaluated in an input-centric manner, rather than an output-centric manner, and their workload is dynamic/data dependent. I.e. changes in the data of an input feature map trigger computations of changes in an output feature map associated therewith. Due to this data dependency, neural network accelerators available for standard ANNs are not suitable to improve processing efficiency of neuromorphic ANNs.

Neuromorphic networks take a radically different approach to evaluate the convolutional relation in equation 1. The terminology "neuromorphic" is used in that they operate in a manner analogous to the operation of neurons in the brain. Contrary to the output-centric approach a convolutional layer in a neuromorphic network does not acquire input data for computing a value of a particular element of its output feature map. Instead it is the data in the input feature map that determines which elements in the output feature map are to be updated. In a biological neural network this is the case in that a neuron issues a spike that causes connected biological neurons to change their state, which may result in subsequent spikes. Likewise, in an (artificial) neuromorphic network a convolutional layer operates in an input-centric manner.

This difference between the output-centric and input-centric approach has profound effects on the way data is processed. Rather than centering the evaluation around computing the data elements in the output feature map Fo one by one, a neuromorphic neural network upon consuming a value of a data element of an input feature map Fi, updates all data elements of the output feature map Fo that are associated with the input data element by the convolution kernel before consuming data from another input data element in Fi. An implementation in pseudo-code is specified by Code Example 2 below.

| Code Example 2 |
| --- |
| ```
for ( int y=0; y<Dy ; y++)
   for (int x=0; x<Dx; x++)
      for ( int i=0; i<Di ; i++){
         for ( int z=0; z<Kz ; z++)
            for ( int l=0; l<Kl ; l++)
               for ( int k=0; k<Kk; k++)
                  Fo [z][y-l][x-k]+= Fi [i][y][x] * W [z][i][l][k]; }
      }
   for ( int z=0; z<Kz ; z++)
      Fo [z][x][y] = Act (Fo [z][x][y]);
``` |

Thus, where in output-centric convolution the outer loops iterate over the output feature map Fo, in input-centric convolution the outer loops iterate over the input feature map Fi.

Code Example 2 captures this input-centric evaluation of convolution. Here the three outer loops, i.e., y, x, and i, iterate over the complete input feature map Fi, i.e, the volume $D_x \otimes D_y \otimes D_i$ in FIG. 2 which visualizes input-centric convolution. The three inner loops, i.e., z, l, and k, add the contribution of each data element in the input feature map Fi to all data elements associated therewith in feature map Fo. i.e., the volume $K_l \otimes K_k \otimes K_z$.

Effectively Code Example 2 is obtained by a loop-exchange of loops z and i. A side-effect is that the activation function Act has to be performed in a separate loop over the coordinate z. It is noted that there exist alternative ways of dealing with this dependency, but these are irrelevant for the further discussion and result in more complex pseudocode. As such these alternatives are not elaborated further in this document.

Input-centric convolution brings several advantages that are exploited by neuromorphic neural networks. For example, as the computation becomes driven by inputs it is possible to only partially process inputs, allowing the suppression of small or irrelevant changes. In particular, the static procedure or iterating over all data elements in input feature map Fi by the three outermost loops can be replaced by a data-driven execution model. For example analogous to a spike occurring in a biological neural network, a convolutional layer in a neuromorphic neural network may be triggered by a message that refers to a particular input address to update the data elements in its output feature map associated with that particular input address. Effectively therewith the evaluation of the neuromorphic network becomes sparse, contrary to classic networks, which require a complete evaluation. It is a disadvantage however, that this sparsity comes at a cost of reduced regularity, which complicates vectorization.

SUMMARY

It is an object of the present invention to provide an improved convolutional neural network processing module that mitigates this disadvantage.

It is a further object of the present invention to provide an improved convolutional neural network processing system comprising an improved convolutional neural network processing module.

It is a further object of the present invention to provide an improved convolutional neural network processing method that mitigates this disadvantage.

In accordance with the first object, the improved convolutional neural network processing module comprises a data processor for processing data from an input feature map and generating data for an output feature map in an output feature map storage space.

Input feature map data is specified as input feature vectors having an input feature vector coordinate and an input feature vector has one or more input feature data elements with a respective input feature data element coordinate.

Input feature map data may be available in an input feature map storage space, but may alternatively be received on an event basis, for example by messages from a sensor, for example an image sensor.

By way of example, the input feature map is defined by a single input feature vector coordinate in the case of a sound signal, where respective values of the single input feature vector coordinate define respective input feature vectors of the sound signal for respective points in time. As a further elaboration of that example, the one or more input feature data elements with respective input feature data element coordinate specify the magnitude of the sound signal in respective frequency bands.

As another example, the input feature map is defined by a pair of input feature vector coordinates in the case of a two dimensional image, where respective pairs of coordinate values of the feature vector coordinate define respective input feature vectors of the two dimensional image. As a further elaboration of that example, the one or more input feature data elements with respective input feature data element coordinate specify the intensity of a pixel in the two dimensional image for respective color channels. Another example of an input feature data element is an indicator for a depth determined at the input feature vector coordinates of the vector. Also higher dimensional feature maps may be contemplated, such as an input feature map defined by a triple of input feature vector coordinates in the case of a three dimensional image or a two-dimensional image as a function of time.

Analogously, output feature map data is specified as output feature vectors with a respective output feature vector coordinate and each output feature vector has one or more output feature data elements with a respective output feature data element coordinate.

As an example, the one or more output feature data elements with respective output feature data element coordinate specify respective indications for the likelihood that particular types of edges are present at a corresponding position in the input feature map. In practice the various features associated with respective output feature data elements may also be obtained by training the convolutional neural network processing module, for example using back-propagation.

The data processor is configured to update output feature map data in an input centric manner. The data processor therewith updates a set of output feature data elements of the output feature map associated with an input feature data element $Fi(i, ..., x_j, ..)$ by a convolution kernel with weights $W(z, i, ..., k, ..)$ using the following computation:

$$Fo\left(z, .., x_j - k_j, ...\right) = f\left(Fo\left(z, ..., x_j - k_j, ...\right), Fi\left(i, .. x_j, ...\right) * W\left(z, i, ... k_j ...\right)\right)$$

In one example, the function f is the following:

$$f(.,..) = Fo\left(z, .., x_j - k_j, ...\right) + Fi\left(i, .. x_j, ...\right) * W\left(z, i, ... k_j ...\right)$$

In one example, the input feature map is available in an input feature map storage space and the data processor is configured to periodically traverse the complete input feature map according to a predetermined sequence and to execute the above-mentioned computations for an element in the input feature map before progressing to the next element in the sequence. In another example, the data processor is configured to perform the convolution operations in a trigger based manner. I.e. upon receipt of a trigger, e.g. a spike, for example in the form of a message, that indicates a particular data element in the input feature map, it performs the above-mentioned computations for that input feature data element. In an embodiment the data processor has an input queue to buffer input messages.

Contrary to known input centric convolutional approaches, the input centric convolutional neural network processing module as presented herein is improved in that respective series of output feature data elements with respective output feature data element coordinate values are stored at respective series of mutually successive locations in the output feature map storage space and that the data processor is configured to access a series of mutually successive locations in the output feature map storage space when updating data elements in the output feature map associated with an input data element. Due to this improvement the data processor is enabled to perform the most inner nested computations, which are the most time-critical in a vectorized manner. Therewith computational efficiency is substantially improved.

It is noted that storage spaces for mutually different purposes may be provided as mutually distinct physical memories, but this is not necessary. Alternatively, it is possible to provide the storage spaces for mutually different purposes as mutually non overlapping sections in a shared memory. The convolution kernel W may be hardwired, but may alternatively be reconfigurable. E.g. the values of the kernel may be stored in a separate kernel memory, or in a proper section of a shared physical memory.

Whereas the invention is presented mainly in the context of a processing module with one input feature map and one output feature map, it will in practice often be the case that the neural network processing module is part of a neural network processing system having a larger number of neural network layers. It is not necessary that each neural network layer has its own storage space, it is for example possible that the output feature map storage space of a neural network layer serves as the input feature map storage space for a subsequent neural network layer.

Also a neural network processing system may comprise in addition to one or more neural network processing modules other types of neural network layers, such as fully connected layers, pooling layers etc.

A neural network processing method as provided herein comprises the steps of:

receiving one or more data elements from an input feature map (Fi), the input feature map (Fi) being specified as input feature vectors having an input feature vector coordinate ($..., x_j, ...$), an input feature vector fi having one or more input feature data elements with a respective input feature data element coordinate;

with a data processor updating in an input centric manner an output feature map Fo in an output feature map storage space (3), the output feature map (Fo) being specified as output feature vectors with a respective output feature vector coordinate ($..., x_j, ...$), each output feature vector fo having one or more output feature data elements with a respective output feature data element coordinate, the data processor therewith updating a set of output feature vector data elements of the output feature map Fo associated with an input feature data element Fi($i, ...x_j, ..$) by a convolution kernel with weights W($z, i,..., k, ..$) using the following computation:

$$Fo\left(z,..,x_j - k_j, ...\right) = f\left(Fo\left(z, ..., x_j - k_j, ...\right), Fi\left(i,.. x_j, ...\right) * W\left(z, i, ... k_j ...\right)\right)$$

The improved neural network processing method is characterized in that respective series of output feature data elements with respective output feature data element coordinate values are stored at respective series of mutually successive locations in the output feature map storage space, and in that the data processor accesses a series of mutually successive locations in the output feature map storage space when performing the computations associated with an input feature data element Fi($i, ...x_j, ..$).

BRIEF DESCRIPTION OF THE DRAWINGS

These and other aspect are described in more detail with reference to the drawings, therein:

FIG. 1 schematically illustrates an output-centric type of computation;
FIG. 2 schematically illustrates an input-centric type of computation;
FIG. 3 schematically shows an embodiment of the improved convolutional neural network processing module;
FIG. 4 schematically illustrates an operation of the embodiment of FIG. 3;
FIG. 5 schematically shows a section of the embodiment of FIG. 3 in more detail;
FIG. 6 schematically shows a first example of an improved neural network processing system comprising an improved convolutional neural network processing module;
FIG. 7 schematically shows a second example of an improved neural network processing system comprising an improved convolutional neural network processing module;
FIG. 8 schematically shows an embodiment of an improved convolutional neural network processing module coupled to an event based sensor;
FIG. 9 schematically shows an embodiment of an improved convolutional neural network processing method.

DETAILED DESCRIPTION OF EMBODIMENTS

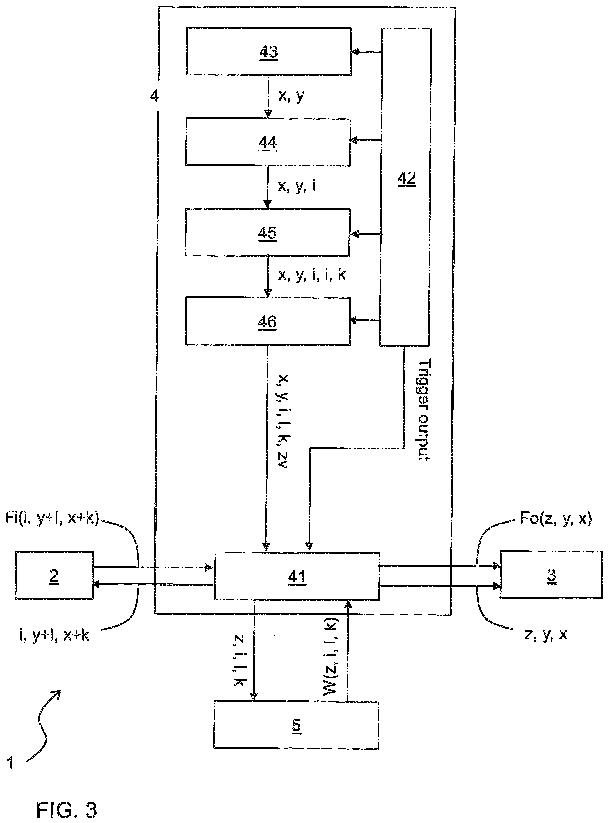

FIG. 3 schematically shows a convolutional neural network processing module 1 that comprises an input feature map storage space 2, an output feature map storage space 3 and a data processor 4 as well as a kernel storage space 5. As noted above, two or more storage spaces may be partitions of a same physical memory or alternatively be provided as respective physical memories.

The input feature map storage space 2 is provided to store an input feature map Fi(). The input feature map Fi in the input feature map storage space specifies a map of input feature vectors fi as a function of one or more input feature vector coordinates. Each input feature vector fi has one or more input feature data elements with respective input feature data element coordinates. In this example, it is presumed that the input feature map Fi is a two-dimensional map. I.e. it defines the input feature vectors fi as a function of a pair of input feature vector coordinates y, x. Further, by way of example it is presumed that an input feature vector has three input feature data elements, each with a respective input feature data element coordinate value i. In this example the three input feature data elements specify the intensity of a pixel y,x in the two-dimensional image for respective color channels R, G, B. As set out above, in other applications, input feature maps may be of different types, dependent on the application. By way of example, the input feature map may be defined by a single input feature vector coordinate in the case of a sound signal, where respective values of the single input feature vector coordinate define respective input feature vectors fi of the sound signal for respective points in time. The input feature data elements may specify the magnitude of the sound signal in respective frequency bands.

The output feature map storage space 3 is provided to store an output feature map Fo() which is to be computed from the input feature map with the data processor 4.

The output feature map Fo in the output feature map storage space specifies a map of output feature vectors fo as a function of one or more output feature vector coordinates. Each output feature vector fo has one or more output feature data elements with respective output feature data element coordinates. In the example shown in FIG. 3, the one or more output feature data elements with respective output feature data element coordinates specify respective indications for the likelihood that a particular type of feature (e.g. an edge) is present at a corresponding position in the input feature map. In practice the various features associated with respective output feature data elements may also be obtained by training the convolutional neural network processing system 1 for example using back-propagation.

The data processor 4 is configured to update output feature map Fo data in an input centric manner. Therewith the data processor updates a set of output feature data elements of the output feature map Fo that are associated with an input feature data element $Fi(i, ...x_j, ..)$ by a convolution kernel with weights $W(z, i, ..., k_j, ...)$ using the following computation:

$$Fo\left(z, .., x_j - k_j, ...\right) = f\left(Fo\left(z, ..., x_j - k_j, ...\right), Fi\left(i, .. x_j, ...\right) * W\left(z, i, ... k_j ...\right)\right)$$

Therein f is an update function, for example in the form of a multiply accumulate operation:

$$Fo\left(z, .., x_j - k_j, ...\right) = Fo\left(z, ..., x_j - k_j, ...\right) + Fi\left(i, .. x_j, ...\right) * W\left(z, i, ... k_j ...\right)$$

The weights $W(z, i, ..., kj, ...)$ of the convolution kernel are stored in the kernel storage space 5.

The data processor 4 is configured to perform the computation in an input centric manner. That is, the data processor determines groups of locations in the output feature map storage space that are associated with a location in the input feature map storage space. The data processor is typically configured to perform sparse computations. E.g. only if a predetermined condition applies to an input feature map vector or a data element it actually performs the above mentioned update function for a section of the output feature map associated with the input feature map vector or data element by the convolution kernel.

According to one approach the data processor is configured to periodically scan the input feature map and to perform the necessary computations if it detects a significant change. According to another approach, the input feature map storage space is formed by active storage elements that are not only capable to store the input feature vector data, but that are also capable to submit a message upon detecting a condition that triggers the data processor to perform the necessary computations. In some embodiments the active storage elements may be capable to perform other logic and/or arithmetic tasks.

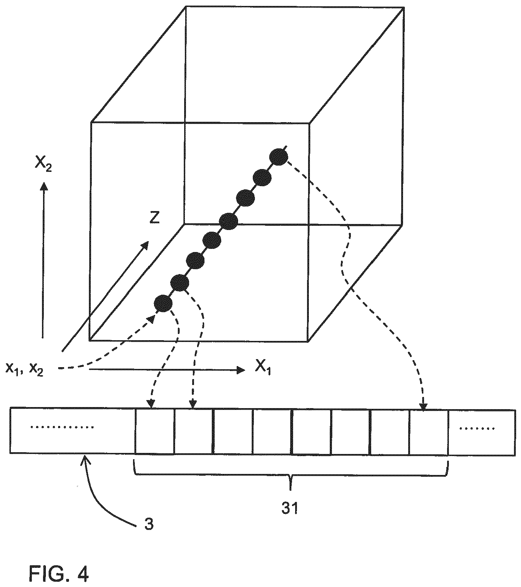

As schematically shown in FIG. 4, respective series of data elements of the output feature map that have mutually successive feature data element coordinates are stored at respective series of mutually successive locations in the output feature map storage space 3. For example FIG. 4 shows that the output feature data elements of a feature vector with coordinates x1, x2 are stored at a series 31 of mutually successive location in the output feature map storage space 3. The data processor 4 is configured to successively access the series of mutually successive locations in the output feature map storage space 3 when performing the update function for a specific input feature map data element.

In the example shown in FIG. 3, the data processor 4 comprises a dedicated SIMD (single instruction multiple

6

data) processor 41, a main controller 42 and coordinate generators 43-46.

In operation a vector coordinate generator 43 generates feature vector coordinates x, y that specify a location of an input feature vector and a location of an output feature vector corresponding therewith. In one embodiment the vector coordinate generator 43 is responsive to an input message, also denoted as spike, indicative that a trigger condition applies to that location of the input feature map. In another embodiment the vector coordinate generator 43 subsequently generates all coordinates in the range of the input feature map, and for each coordinate the SIMD processor 41 determines whether or not the trigger condition applies to that location. Only if the trigger condition applies, it performs the update operation for the section in output feature map associated with the location in the input feature map for which the trigger condition was detected. It is noted that in case the trigger condition applies to a particular input feature data element it may suffice to perform the update function f only to the set of output feature data elements that are associated with the particular input feature data element by the convolution kernel. Alternatively, in some embodiments, the update function f is applied to the set of output feature data elements that are associated with the input feature vector comprising the data element for which the trigger condition applies.

The input feature data element index generator 44 is configured to generate an input feature data element index i that indicates a respective input feature data element within the currently addressed input feature vector. Furthermore a kernel element index generator 45 is configured to generate a kernel element index pair l, k. The output feature data element index generator 46 is configured to generate an output feature data element block index zv that indicates a respective block of feature data elements within the currently addressed output feature vector. The SIMD processor 41 is configured to perform the following computation for a block of feature data elements defined by a convolution kernel [i][l][k] with weights W [z][i][l][k].

| Code Example 3: |
| --- |
| for (int z=zv; z<zv+V; z++)<br>    Fo [z][y-l][x-k] += Fi [i][y][x] * W [z][i][l][k] |

Because the SIMD processor 41 performs this computation in the innermost loop in a vectorized manner, a substantial improvement of computational efficiency is obtained with which the convolution is performed in an inner centric manner. In an embodiment, the SIMD processor 41 fetches a vector of V elements from the series of successive locations in the output feature map storage space 3 in a single memory access operation, performs the update function to this vector and writes the updated vector to the output feature map storage space 3, also in a single memory access operation.

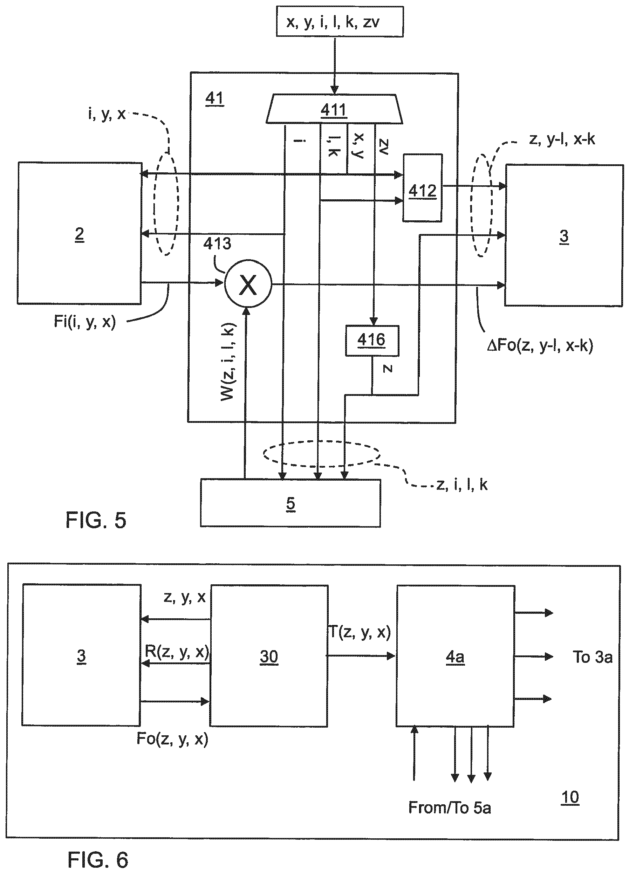

FIG. 5 schematically shows an exemplary embodiment of the SIMD processor 41 as used in FIG. 3. In the example shown, control input element 411 receives control information comprising feature vector coordinates x, y, input feature data element index i, kernel element index pair k, l and output feature data element block index zv. Address computation element 412 computes output feature vector coordinates (y-l, x-k), and address computation element 416 generates a series of mutually succeeding z-coordinates zv, zv+1, ...zv+V-1. Multiplicator 413 multiplies the value Fi(i, y, x) with the weight value W(z, i, l, k) and the multiplication result ΔFo(z, y-l, x-k) is added to the location (z, y-l, x-k) in the output feature map in the output feature map storage space 3. Hence, in this example the SIMD processor 41 performs the multiplication:

$$\Delta \mathrm{Fo}\ [z][y\text{-}l][x\text{-}k] = \mathrm{Fi}\ [i][y][x] * \mathrm{W}\ [z][i][l][k],$$

and it instructs the output feature map storage space 3 to perform the addition:

$$\mathrm{Fo}\ [z][y\text{-}l][x\text{-}k] = \mathrm{Fo}\ [z][y\text{-}l][x\text{-}k] + \Delta \mathrm{Fo}\ [z][y\text{-}l][x\text{-}k]$$

Accordingly, in this embodiment the output feature map storage space 3 is enhanced so as to configure it to perform this function.

As noted above, in some embodiments the SIMD processor 41 does not address a single location output feature map storage space 3, but instead it addresses a series of mutually subsequent locations therein. In one example as referred to above, the SIMD processor 41 fetches a vector of V elements from the series of successive locations in the output feature map storage space 3 in a single memory access operation, performs the update function to this vector, e.g. a multiply accumulate operation, and writes the updated vector to the output feature map storage space 3, also in a single memory access operation. In a hybrid approach, the SIMD processor 41 executes the function

Δ Fo [z] [y-1] [x-k] = Fi [i][y][x] * W [z][i][l][k] for a series of z-values z = zv, zv+1, ....zv+V-1, therewith obtaining a vector:

$$\Delta Fo\ [zv][y\text{-}l][x\text{-}k],\ \Delta Fo\ [zv+1][y\text{-}l][x\text{-}k],\ ...,\ \Delta Fo\ [zv+V\text{-}1][y\text{-}l][x\text{-}k]$$

and subsequently in a single memory access writes this vector to the output feature storage space 3 with the instruction to perform a vector wise addition.

In some examples the output feature map in output feature map storage space 3 is also the desired output. In other examples, the output feature map serves as an input for further stages of a neural network processing system. This case is schematically illustrated in FIG. 6. A state monitor 30 is provided therein that monitors a state of the output feature map in output feature map storage space 3. In operation the state monitor periodically scans the content of the output feature map and evaluates the accumulated value Fo(z, y, x). If an accumulated value exceeds a threshold value it resets the value to a reference value with an instruction R(z, y, x) and further instructs a data processor 4a, associated with a next stage, to update its proper output feature map in a proper feature map storage space 3a based on the convolution specified by convolution kernel in its proper kernel storage space 5a.

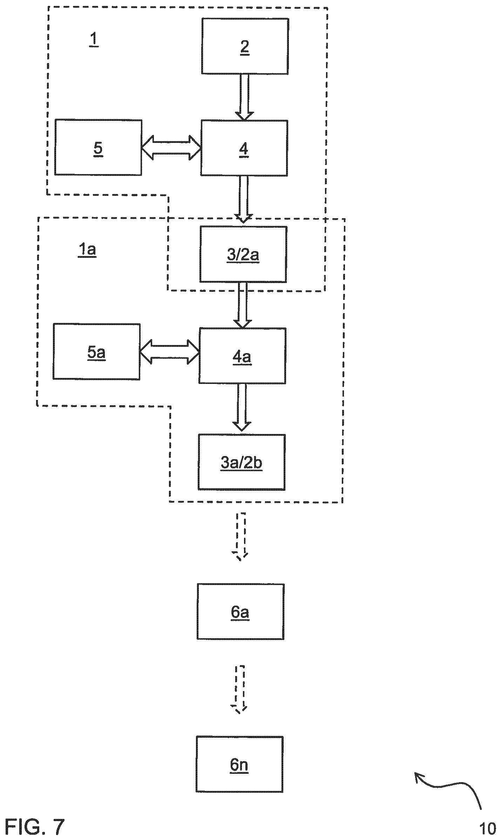

FIG. 7 schematically shows another example of a neural network processing system 10, that comprises one or more convolutional neural network processing modules 1, 1a, and that further comprises one or more further layers 6a, 6n, such as fully connected layers, pooling layers, and the like. In this example the first and the second neural network processing modules 1, 1a share a common feature map storage space, indicated as 3/2a and the second neural network processing module 1a may share a common feature map storage space, indicated as 3a/2b with a still further neural network processing module.

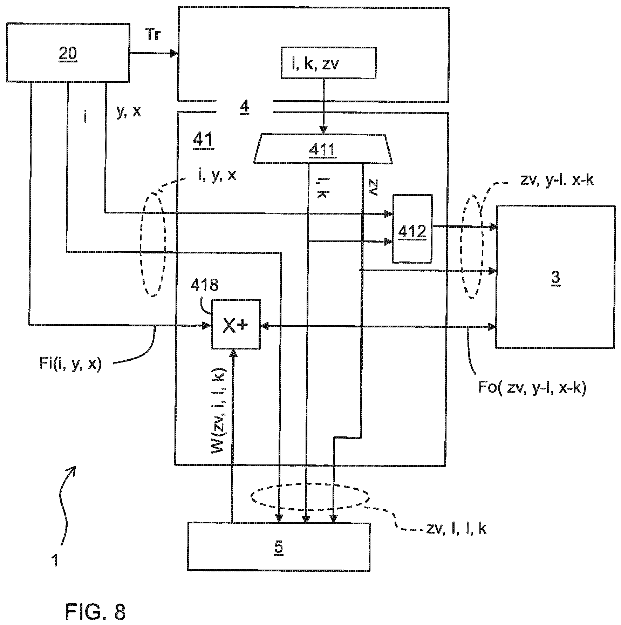

FIG. 8 shows an example, wherein a convolutional neural network processing module 1 is coupled to an event based camera 20. In operation, the camera 20 provides a trigger signal Tr and provides the input feature map coordinates i, y, x and the feature map value Fi(i, y, x) to the data processor 4, which updates the output feature map Fo. In this example, the data processor 4 is configured to fetch a vector of kernel element values W(zv, i, k, l), W(zv+1, i, k, l), ..., W(zv+V-1, i, k, l) from kernel memory 5 in a single memory access operation. For clarity, this vector of kernel element values is denoted as W(zv, i, k, l) in the drawing. The data processor 4 is also configured to fetch a vector of output feature map data elements Fo (zv, y-l, x-k), Fo (zv+1, y-l, x-k), ..., Fo (zv+V-1, y-l, x-k), for simplicity denoted as Fo (zv, y-l, x-k), in a single memory access operation from the output feature memory storage space 3. The SIMD processor 41 has a multiply accumulate element 418 configured to perform the computation

Fo [z] [y-1] [x-k] = Fo [z] [y-1] [x-k] + Fi [i][y][x] * W [z][i][l][k] for a series of z-values z = zv, zv+1, ....zv+V-1, in response to a single SIMD instruction.

The SIMD processor 41 is further configured to write the modified vector Fo [zv][y-l][x-k] in a single memory access operation into the output feature map storage space.

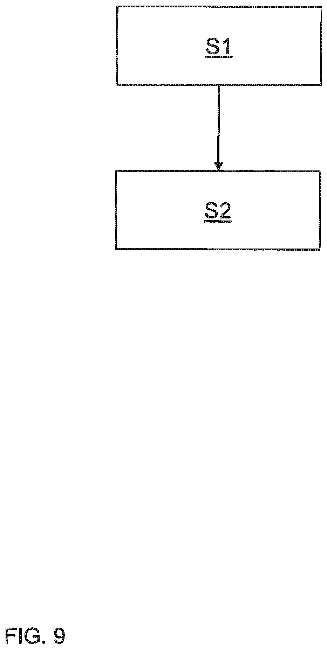

FIG. 9 schematically illustrates a convolutional neural network processing method.

In step S1 one or more data elements are received from an input feature map that is specified as input feature vectors having an input feature vector coordinate (..., $x_j$, ...), an input feature vector fi having one or more input feature data elements with a respective input feature data element coordinate. The input feature map data may be fetched from an input feature map storage space, but may alternatively be received as payload of a message, e.g. from an event based sensor, or from another processing module.

In step S2 a data processor updates in an input centric manner an output feature map Fo in an output feature map storage space, the output feature map is specified as output feature vectors with a respective output feature vector coordinate (..., $x_j$, ...) and each output feature vector fo has one or more output feature data elements with a respective output feature data element coordinate. In performing step S2, the data processor updates a set of output feature vector data elements of the output feature map Fo associated with an input feature data element Fi(i, ...$x_j$, ..) by a convolution kernel with weights W(z, i, ..., k, ..) using the following computation:

$$Fo\left(z,..,x_j - k_j, ...\right) = f\left(Fo\left(z, ..., x_j - k_j, ...\right), Fi\left(i, ...x_j, ...\right) * W\left(z, i, ...k_j ...\right)\right)$$

Respective series of output feature data elements with respective output feature data element coordinate values are stored at respective series of mutually successive locations in the output feature map storage space. The data processor therewith accesses a series of mutually successive locations in the output feature map storage space when performing the computations associated an input feature data element Fi(i, ...xj, ..).

The input feature vector coordinates may be defined in an N-dimensional space, for example a one-dimensional space for a sound signal, a two-dimensional space for a two-dimensional image. As further examples a three dimensional space is used for a two-dimensional image which is further specified as a function of time, or for a three-dimensional image. As a still further example a four dimensional space, is used to specify a three-dimensional image in time. An input feature vector comprises feature elements, for example amplitude of a sound signal in respective frequency bands, intensities of a pixel in respective color channels.

Likewise, the output feature map Fo specifies a map of output feature vectors as a function of one or more output feature vector coordinates (..., $x_j$, ...), and each output feature vector fo has one or more output feature data elements with respective output feature data element coordinates. As in the input feature map, the output feature vector coordinates may be defined in one or more dimensions dependent on the type of data that is processed. A set of output feature data elements of the output feature map Fo is updated that is associated with an input feature data element Fi(i, ...$x_j$, ..) by a convolution kernel with weights W(z, i,..., k, ..) using the following computation:

$$Fo(z,..,x_j - k_j, ...) = f\left(Fo(z, ..., x_j - k_j, ...), Fi(i,..x_j, ...) * W(z, i, ... k_j ...)\right).$$

Accordingly the computation is performed for any element Fo(z, ...$x_j$-$k_j$, ..., ...) that is associated with the input data element Fi(i, ..., xj, ...) in that the convolution kernel has a kernel element with non-zero weight W(z, i, ...kj, ...). The kernel specifies templates for various features. For example, in the case of image data each value for z is related to a specific type of edge to be detected in the image.

As described with reference to FIG. 4, respective series of output feature data elements with respective output feature data element coordinate values are stored at respective series of mutually successive locations in the output feature map storage space. When updating the output feature map in step S2, the data processor accesses a series of mutually successive locations in the output feature map storage space.

In a practical embodiment the step of updating S2 is performed with a vector processor, e.g. an SIMD processor. The vector processor may be configured to access a plurality V of mutually successive memory locations at once. Typically the plurality V is a power of 2. In case the dimension of the kernel in the direction z exceeds the predetermined plurality V, a controller may instruct the vector processor to perform the vector operations for groups of size V.

Elements of the disclosure may be combined in various alternative ways. For example, the exemplary convolutional neural network processing module 1 as shown in FIG. 5 may be configured with the SIMD processor 41 as described with reference to FIG. 8. Alternatively, the exemplary convolutional neural network processing module 1 as shown in FIG. 8 may be configured with the SIMD processor 41 as described with reference to FIG. 5.

It is noted that a component or module may comprise dedicated circuitry or logic that is permanently configured (e.g., as a special-purpose processor) to perform certain operations. A component or a module also may comprise programmable logic or circuitry (e.g., as encompassed within a general-purpose processor or other programmable processor) that is temporarily configured by software to perform certain operations. Accordingly, the term "component" or "module" should be understood to encompass a tangible entity, be that an entity that is physically constructed, permanently configured (e.g., hardwired) or temporarily configured (e.g., programmed) to operate in a certain manner and/or to perform certain operations described herein. Considering embodiments in which components or modules are temporarily configured (e.g., programmed), each of the components or modules need not be configured or instantiated at any one instance in time. For example, where the components or modules comprise a general-purpose processor configured using software, the general-purpose processor may be configured as respective different components or modules at different times. Software may accordingly configure a processor, for example, to constitute a particular component or module at one instance of time and to constitute a different component or module at a different instance of time.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

**Claims**

1. A convolutional neural network processing module (1), comprising a data processor (4) for processing data from an input feature map and generating data for an output feature map in an output feature map storage space (3),

input feature map (Fi) data being specified as input feature vectors having an input feature vector coordinate (..., $x_j$, ...), an input feature vector fi having one or more input feature data elements with a respective input feature data element coordinate,

output feature map (Fo) data being specified as output feature vectors with a respective output feature vector coordinate (..., $x_j$, ...), each output feature vector fo having one or more output feature data elements with a respective output feature data element coordinate;

the data processor (4) being configured to update output feature map Fo data in an input centric manner, the data processor therewith updating a set of output feature data elements of the output feature map Fo associated with an input feature data element Fi(i, ...$x_j$, ...) by a convolution kernel with weights W(z, i,,...,k,..) using the following computation:

$Fo(z,..,x_j - k_j,...) = f(Fo(z,..., x_j - k_j,...), Fi(i,..x_j...) * W(z,i,...k_j ...))$, wherein f is an update function; **characterized in that** respective series of output feature data elements with respective output feature data element coordinate values are stored at respective series of mutually successive locations in the output feature map storage space (3), and **in that** the data processor (4) is configured to access a series of mutually successive locations in the output feature map storage space (3) when performing the computations associated with an input feature data element Fi(i, ...$x_j$, ...).

2. The convolutional neural network processing module (1) according to claim 1, wherein the data processor (4) comprises an SIMD processing unit to apply the update function f to a series of data elements in a series of mutually successive locations.

3. The convolutional neural network processing module according to claim 1, wherein the operation is a multiply accumulate, wherein the updated value of an output feature data element is the sum of the original value of said output feature data element and the product of the value of the input feature data element with the weight of the kernel element that associates that output feature data element with that input feature data element.

4. The convolutional neural network processing module according to claim 1, wherein the function f further includes an activation function.

5. The convolutional neural network processing module according to claim 1, configured to perform the convolution operations in a trigger based manner.

6. The convolutional neural network processing module according to claim 5, wherein input feature map (Fi) data is provided by an event based camera (20) that is configured to trigger the data processor (4) to update the output feature map data associated with the provided input feature map (Fi) data.

7. A neural network processing system comprising one or more convolutional neural network processing modules as claimed in either of the preceding claims.

8. The neural network processing system according to claim 5, further comprising one or more of a fully connected layer, a pooling layer, etc.

9. A convolutional neural network processing method, comprising:

- receiving one or more data elements from an input feature map (Fi), the input feature map (Fi) being specified as input feature vectors having an input feature vector coordinate (..., xj, ...), an input feature vector fi having one or more input feature data elements with a respective input feature data element coordinate;
- with a data processor (4) updating in an input centric manner an output feature map Fo in an output feature map storage space (3), the output feature map (Fo) being specified as output feature vectors with a respective output feature vector coordinate (..., $x_j$, ...), each output feature vector fo having one or more output feature data elements with a respective output feature data element coordinate, the data processor therewith updating a set of output feature vector data elements of the output feature map Fo associated with an input feature data element Fi(i, ...xj, ...) by a convolution kernel with weights W(z, i, ...,k, ...) using the following computation:

$$Fo\left(z,..,x_j - k_j,...\right) = f\left(Fo\left(z,...,x_j - k_j,...\right), Fi\left(i,..x_j,...\right) * W\left(z,i,...k_j...\right)\right)$$

**characterized in that** respective series of output feature data elements with respective output feature data element coordinate values are stored at respective series of mutually successive locations in the output feature map storage space, and **in that** the data processor (4) accesses a series of mutually successive locations in the output feature map storage space (3) when performing the computations associated an input feature data element Fi(i, ...xj, ...).

10. The method according to claim 9, wherein updating an output feature data element comprises multiplying the value of the input feature data element with the weight of the kernel element that associates said output feature data element with said input feature data element and adding the multiplication result to the value of said output feature data element.

11. The method according to claim 10, wherein updating an output feature data element includes applying an activation function.

12. The method according to either of claims 9, 10 or 11, comprising periodically traversing the input feature map and for each input feature data element updating a region in the output feature map associated with said input feature data element by the convolution kernel.

13. The method according to either of claims 9, 10 or 11, comprising generating a trigger for a specific input feature data element and updating a region in the output feature map associated with said specific input feature data element by the convolution kernel.

14. The method according to claim 13, comprising receiving input data from an event based camera (20) indicative for an event with a specific input feature data element serving as a trigger to the data processor (4) to update a region in the output feature map associated with said specific input feature data element by the convolution kernel.

15. The method according to claim 13, comprising monitoring a state of the input feature map, identifying at least one specific input feature data element for which a state change has occurred and triggering the data processor (4) to update a region in the output feature map associated with said specific input feature data element by the convolution kernel.

FIG. 1

FIG. 2

FIG. 3

FIG. 4

FIG. 5

FIG. 6

FIG. 7

FIG. 8

S1

S2

FIG. 9

Europäisches
Patentamt

European
Patent Office

Office européen
des brevets

# EUROPEAN SEARCH REPORT

Application Number

EP 21 29 0073

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | KWON HYOUKJUN HYOUKJUN@GATECH EDU ET AL: "Understanding Reuse, Performance, and Hardware Cost of DNN Dataflow A Data-Centric Approach", PROCEEDINGS OF THE 52ND ANNUAL IEEE/ACM INTERNATIONAL SYMPOSIUM ON MICROARCHITECTURE, MICRO '52, ACM PRESS, NEW YORK, NEW YORK, USA, 12 October 2019 (2019-10-12), pages 754-768, XP058476912, DOI: 10.1145/3352460.3358252 ISBN: 978-1-4503-6938-1 * figure 1 and 2 * * sections 2.1, 2.2, 3.2 and 4.4 * | 1-15 | INV. G06N3/04 G06N3/063 G06F12/00 |
| Y | US 2015/293162 A1 (TSUKAMOTO KENTA [JP] ET AL) 15 October 2015 (2015-10-15) * paragraph [0067] * | 1-15 | |
| A | JP H05 94519 A (HITACHI SEIKO KK) 16 April 1993 (1993-04-16) * paragraph [0006] * | 1-15 | |

TECHNICAL FIELDS
SEARCHED (IPC)

G06N
G06F

The present search report has been drawn up for all claims

| Place of search | Date of completion of the search | Examiner |
|---|---|---|
| Munich | 19 April 2022 | Regidor Arenales, R |

## ANNEX TO THE EUROPEAN SEARCH REPORT
## ON EUROPEAN PATENT APPLICATION NO.

EP 21 29 0073

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2022

| Patent document cited in search report | | Publication date | Patent family member(s) | | Publication date |
|---|---|---|---|---|---|
| US 2015293162 | A1 | 15-10-2015 | JP | 6476861 B2 | 06-03-2019 |
| | | | JP | WO2014065032 A1 | 08-09-2016 |
| | | | US | 2015293162 A1 | 15-10-2015 |
| | | | WO | 2014065032 A1 | 01-05-2014 |
| JP H0594519 | A | 16-04-1993 | NONE | | |

EPO FORM P0459

For more details about this annex : see Official Journal of the European Patent Office, No. 12/82